# EUROPÄISCHE PATENTSCHRIFT

(11) **EP 0 304 413 B1**
(45) Veröffentlichungstag und Bekanntmachung des Hinweises auf die Patenterteilung: **10.03.1993**
(21) Anmeldenummer: 88890203.8
(22) Anmeldetag: 03.08.1988
(51) Int. Cl.: C21C 5/56, C21B 13/00

(54) **Verfahren zum Einschmelzen von Schrott, Eisenschwamm und/oder festem Roheisen od. dgl.**
Method for melting scrap, sponge iron and/or solid pig iron or the like
Procédé de fusion de ferraille, d'éponge de fer et/ou de fonte brute solide ou similaire

(30) Priorität: 21.08.1987 AT 2101/87
(43) Veröffentlichungstag der Anmeldung: 22.02.1989
(73) Patentinhaber: VOEST-ALPINE STAHL Donawitz GmbH (HRB Nr. 502), A-8700 Leoben-Donawitz (AT)
(72) Erfinder: Von Bogdandy, Ludwig Prof. Dr.-Ing. Dr.-Ing. E.h., A-4020 Linz (AT); Mitter, Gerhard Prok. Dir. Dipl.-Ing., A-5020 Traun (AT); Köller, Otto, Dipl.-Ing., A-8700 Leoben (AT)
(74) Vertreter: Haffner, Thomas M., Dr.

(56) Entgegenhaltungen:
- EP-A- 0 034 379
- DE-A- 2 504 945
- DE-B- 1 800 610
- DE-C- 971 242
- US-A- 4 417 924
- STAHL UND EISEN, Band 99, Nr. 7, April 1979, Seiten 334-336; D. RADKE et al.: "Einschmelzen von Eischenschwamm oder Schrott in einem Stahlwerksgefass durch Gleichzeitiges Einblasen von Feinkohle und Sauerstoff"

## Beschreibung

Die Erfindung bezieht sich auf ein Verfahren zum Einschmelzen von Schrott, Eisenschwammpellets in vorreduzierter Form und/oder festem Roheisen zur Herstellung von Stahl, bei welchem die Schmelzwärme mittels Brennern von unten eingebracht wird und das aus dem Einschmelzgefäß ausgebrachte flüssige Material in einer Pfanne gesammelt wird, in welcher erforderlichenfalls weitere Legierungsschritte vorgenommen werden.

Aus der DE-AS 25 04 889 ist bereits ein Verfahren zum kontinuierlichen Einschmelzen von Schrott, Eisenschwamm od.dgl. bekanntgeworden, bei welchem durch Zusatz von reaktionsträgen großen Kohlenstücken zum Einsatzmaterial unterhalb der oxidierenden Einschmelzzone eine Aufkohlung des Bades erreicht werden sollte. Mit Rücksicht auf die oxidierende Flamme von konventionellen Brennstoff-Sauerstoff-Brennern kommt es zu einer unerwünschten Oxidation der Einsatzstoffe und es wurden bereits eine Reihe von Vorschlägen gemacht, um diese Oxidation zu verhindern oder wenigstens zu verringern. Es wurde in diesem Zusammenhang beispielsweise in der AT-PS 363 503 bereits vorgeschlagen, Kohlestaub gemeinsam mit den Verbrennungsabgasen auf das Bad zu blasen. Beim Zumischen von Kohle zum Einsatz ergibt sich insbesondere bei hochbauenden Schachtöfen zumeist der Nachteil, daß ein großer Teil der beigemischten Kohle mit den Flammengasen innerhalb des Schachtes verbrennt und aus diesem Grunde im Einschmelzbereich nur noch vermindert wirksam ist. Das Einblasen von Kohlenstoff am Boden des Einschmelzgefäßes zur Aufkohlung des Bades erfordert in der Regel eine zusätzliche Aufheizung im Bereich des Bodens. In das Bad eingeblasener Kohlenstoff führt zu einer weiteren Desoxidation der Schmelze, welche zu unerwünschten übermäßigen Kochreaktionen führen kann. Ebenso kann bei Chargieren von entsprechend großen Kohlestücken, welche in der Folge die Einschmelzzone passieren und im Bad noch zur Wirkung gelangen sollen, ein relativ hohes Maß an Inhomogenität im Bad beobachtet werden, welches zu lokaler übermäßiger Kochreaktion führen kann.

Aus der DE-A 25 04 945 ist ein Verfahren zum kontinuierlichen Einschmelzen von Schrott oder Eisenschwamm bekanntgeworden, bei welchem Eisenschwamm od.dgl. in einem Schachtofen im Gegenstrom mit einer Sauerstoff-Brennstoff-Flamme von unten aufgeschmolzen wird. Hiebei wird zur Nachverbrennung der in der Hauptbrennerebene zugeführten Brennstoffe in mehreren darüberliegenden Ebenen Luft bzw. Sauerstoff zugeführt um eine Nachverbrennung der Brennstoffabgase sicherzustellen.

Insbesondere bei kleinbauenden Einschmelzöfen erfolgt der Durchsatz der Charge in relativ kurzer Zeit. In derartig kurzer Zeit kann abweichend von den Verhältnissen, wie sie beispielsweise in einem Hochofen vorliegen, eine vollständige Reaktion von stückiger Kohle nicht erwartet werden. Vielmehr würde ein großer Teil des beispielsweise in Form von Koks mitchargierten Kohlenstoffes bis zum Bereich der Flamme in der niedergehenden Säule kaum verändert und in der unter Sauerstoffzufuhr verbrennenden Flamme weitgehend verbrannt.

Mit Rücksicht auf die Überoxidation bei Verwendung von Brennstoff-Sauerstoff-Brennern wurde bei den bisher bekannten Einschmelzverfahren in der Regel Kohle zuchargiert, um die Eisenverluste durch hohe Eisenoxidgehalte der Schlacke gering zu halten. Hohe Eisenoxidgehalte der Schlacke haben darüber hinaus den Nachteil, daß eine derartige relativ aggressive Schlacke die Auskleidung in übermäßigem Ausmaß angreift und somit die Standzeit der feuerfesten Auskleidung herabsetzt.

Die Erfindung zielt nun darauf ab ein Verfahren der eingangs genannten Art zu schaffen, mit welcher ein homogenes Schmelzbad mit einem entsprechenden Kohlenstoffgehalt eingestellt werden kann ohne daß hiebei ein übermäßiger Anteil an Eisenoxid in der Schlacke entsteht und mit welcher gleichzeitig die Aggressivität der Schlacke deutlich verringert wird. Zur Lösung dieser Aufgabe besteht die Erfindung im wesentlichen darin, daß die Charge ohne Zusatz von Kohle eingebracht wird und daß die Schmelzwärme durch unterstöchiometrische Verbrennung von Kohlenwasserstoffen, insbesondere Erdgas, aufgebracht wird und daß durch Verminderung des Sauerstoffflusses bei der Verbrennung der gewünschte C-Gehalt des Bades eingestellt wird und daß mit den zu schmelzenden Einsatzstoffen Schlackenbildner, wie CaO, MgO und Al₂O₃, eingesetzt werden, wobei eine Schlacke eingestellt wird, welche 10 - 13 % SiO₂, 3 - 3,5 % MnO, 7 - 8 % Al₂O₃, 5 - 6 % CaO, 7 - 8 % MgO, 3 - 4 % Cr₂O₃ und bis zu 5 % übliche Verunreinigungen, Rest FeO enthält. Dadurch, daß die Charge ohne Zusatz von Kohle eingebracht wird, läßt sich die Verbrennung in der Brennzone und damit die Temperatur in der Einschmelzzone exakter regeln und sicherstellen, daß lokale übermäßige Kochreaktionen im Bad vermieden werden, wie sie durch stückige Teile der Kohle bewirkt werden können. Dadurch, daß die Verbrennung durch Einstellung eines verminderten Sauerstoffflusses unterstöchiometrisch durchgeführt wird, kann in der Brennerebene ein Kohlenstoffgehalt mit überaus feiner Verteilung in Form von Ruß sichergestellt werden,welcher rasch und homogen im Bad aufgelöst werden kann. Die Steuerung des Sauerstoffflusses kann hiebei unmittelbar zur Einstellung des gewünschten Kohlenstoffgehaltes im Bad herangezogen werden. Die gleichmäßige und homogene Verteilung des Kohlenstoffes im Bad führt gleichzeitig zu einer höheren Reinheit der Schmelze und durch den Verzicht auf eine Beimengung von Kohlenstoff lassen sich andere erwünschte metallurgische Arbeiten exakter beherrschen. Im besonderen ermöglicht das erfindungsgemäße Verfahren eine gleichzeitige Vornahme einer Entschwefelung oder einer Entphosphorung durch Zusatz geeigneter Verschlackungsmittel. Um metallurgische Arbeiten, wie beispielsweise die Entschwefelung und Entphosphorung durchführen zu können werden mit den zu schmelzenden Einsatzstoffen Schlackenbildner, wie CaO, MgO und Al₂O₃, eingesetzt. Diese Schlackenbildner haben gleichzeitig mit den erwünschten metallurgischen Reaktionen den Vorteil, daß die Aggressivität der Schlacke in dem gewünschten Ausmaß verringert werden kann. Zur Herabsetzung der Aggressivität der Schlacke genügt es, den Eisenoxidgehalt auf 40 bis 60 % herabzudrücken, was durch entsprechende Beimengungen an CaO, MgO und Al₂O₃ gelingt. Die Beimengung von CaO und MgO führt hiebei auf Grund der stark basischen Reaktion dieser Beimengungen neben der Entschwefelung und Entphosphorung zu einer weitgehenden Neutralisierung der Schlacke, wohingegen das beigemengte Al₂O₃ sich in der Schlacke weitgehend neutral verhält und daher nach Art eines Verdünnungsmittels wirksam wird. Insgesamt gelingt es durch derartige Zusätze den FeO-Anteil der Schlacke wesentlich herabzusetzen und dadurch die Aggressivität der Schlacke bedeutend zu vermindern. Dadurch, daß eine Schlacke eingestellt wird, welche 10 - 13 % SiO₂, 3 - 3,5 % MnO, 7 - 8 % Al₂O₃, 5 - 6 % CaO, 7 - 8 % MgO, 3 - 4 % Cr₂O₃ und bis zu 5 % übliche Verunreinigungen, Rest FeO enthält, wird die Aggressivität der Schlacke deutlich verringert.

Mit Vorteil wird das erfindungsgemäße Verfahren so durchgeführt, daß die Verbrennung mit dem ungefähr 0,9-fachen der stöchiometrischen Sauerstoffmenge durchgeführt wird.

Um die Energieausnutzung zu verbessern, kann mit Vorteil im Rahmen des erfindungsgemäßen Verfahrens oberhalb der Brennerebenen, insbesondere auf etwa halber Höhe des Schmelzgefäßes Luft zur vollständigen Verbrennung der Abgase eingeblasen werden. Mit einem derartigen vollständigen Ausbrand der Abgase kann die dadurch entstehende zusätzliche Energie auf den Schrott übertragen werden, wobei die erforderliche

Verbrennungsluft bzw. Sauerstoffmenge über eine Düsenreihe oberhalb der Brenner eingeblasen werden kann.

Die Erfindung wird nachfolgend anhand von Beispielen näher erläutert.

### Beispiel 1:

Zum Einschmelzen von Schrott wurden die Brenner mit einem stöchiometrischen Faktor λ = 1 eingestellt und eine Schlacke eingestellt, welche 10 % SiO₂, 3 % MnO, 7 % Al₂O₃, 5 % CaO, 7 % MgO, 3 % Cr₂O₃ und bis zu 5 % übliche Verunreinigungen enthält. Der FeO-Gehalt der Schlacke wurde mit 60 - 65 % bestimmt.

### Beispiel 2:

Unter Einhaltung eines unterstöchiometrischen Faktors λ = 0,8 - 0,9 wurden Schlackenbildner zur Erzielung einer Schlacke mit einer Zusammensetzung von 13 % SiO₂, 3,5 % MnO, 8 % Al₂O₃, 6 % CaO, 8 % MgO und 4 % Cr₂O₃ zugesetzt. Der FeO-Gehalt wurde mit 40 - 50 % bestimmt, wodurch das Fe-Ausbringen deutlich verbessert und die Aggressivität der Schlacke deutlich verringert wurde.

## Patentansprüche

1. Verfahren zum Einschmelzen von Schrott, Eisenschwammpellets in vorreduzierter Form und/oder festem Roheisen zur Herstellung von Stahl, bei welchem die Schmelzwärme mittels Brennern von unten eingebracht wird und das aus dem Einschmelzgefäß ausgebrachte flüssige Material in einer Pfanne gesammelt wird, in welcher erforderlichenfalls weitere Legierungsschritte vorgenommen werden, wobei die Charge ohne Zusatz von Kohle eingebracht wird, die Schmelzwärme durch unterstöchiometrische Verbrennung von Kohlenwasserstoffen, insbesondere Erdgas, aufgebracht wird und durch Verminderung des Sauerstoffflusses bei der Verbrennung der gewünschte C-Gehalt des Bades eingestellt wird, und wobei mit den zu schmelzenden Einsatzstoffen Schlackenbildner, wie CaO, MgO und Al₂O₃, eingesetzt werden und eine Schlacke eingestellt wird, welche 10 - 13 % SiO₂, 3 - 3,5 % MnO, 7 - 8 % Al₂O₃, 5 - 6 % CaO, 7 - 8 % MgO, 3 - 4 % Cr₂O₃ und bis zu 5 % übliche Verunreinigungen, Rest FeO enthält.

2. Verfahren nach Anspruch 1, dadurch gekennzeichnet, daß die Verbrennung mit dem ungefähr 0,9-fachen der stöchiometrischen Sauerstoffmenge durchgeführt wird.

3. Verfahren nach einem der Ansprüche 1 oder 2, dadurch gekennzeichnet, daß oberhalb der Brenner, insbesondere auf etwa halber Höhe des Schmelzgefäßes, Luft zur vollständigen Verbrennung der Abgase eingeblasen wird.

## Claims

1. A process for melting scrap, sponge iron pellets in pre-reduced form and/or solid pig iron for the production of steel, in which the melting heat is introduced from below by means of burners and the liquid material obtained from the melting vessel is collected in a ladle, in which further alloying steps are necessarily taken, wherein the charge is introduced without addition of coal, the melting heat is applied by substoichiometric combustion of hydrocarbons, in particular natural gas, and the desired C-content of the bath is adjusted by reducing the oxygen flow during combustion, and wherein slag-forming constituents, such as CaO, MgO and Al₂O₃, are included with the charge materials to be melted, and a slag is adjusted to contain 10 - 13 % SiO₂, 3 - 3.5 % MnO, 7 - 8 % Al₂O₃, 5 - 6 % CaO, 7 - 8 % MgO, 3 - 4 % Cr₂O₃ and up to 5 % of the usual impurities, the remainder being FeO.

2. A process according to Claim 1, characterised in that the combustion is carried out with approximately 0.9 times the stoichiometric quantity of oxygen.

3. A process according to Claim 1 or 2, characterised in that air for complete combustion of the exhaust gases is injected above the burners, in particular at approximately half the height of the melting vessel.

## Revendications

1. Procédé pour la fusion de ferraille, de granules d'éponge de fer sous forme préréduite et/ou de fonte brute solide, pour la production d'acier, dans lequel la chaleur pour la fusion est introduite par le bas au moyen de brûleurs et la matière liquide, évacuée du récipient de fusion, est recueillie dans une poche, dans laquelle d'autres étapes d'alliage sont effectuées si nécessaire, la charge étant introduite sans addition de carbone, la chaleur pour la fusion étant appliquée par combustion sous-stooechiométrique d'hydrocarbures, en particulier de gaz naturel, et la teneur en carbone désirée du bain étant ajustée par diminution du courant d'oxygène lors de la combustion, et, en utilisant les additifs générateurs de laitier à fondre, tels que CaO, MgO et Al₂O₃, on ajuste un laitier qui contient 10 - 13 % de SiO₂, 3 - 3,5 % de MnO, 7 - 8 % de Al₂O₃, 5 - 6 % de CaO, 7 - 8 % de MgO, 3 - 4 % de Cr₂O₃ et jusqu'à 5 % d'impuretés usuelles, le reste étant constitué de FeO.

2. Procédé selon la revendication 1, caractérisé en ce que la combustion est effectuée avec environ 0,9 fois la quantité stooechiométrique d'oxygène.

3. Procédé selon la revendication 1 ou 2, caractérisé en ce que, au-dessus des brûleurs, en particulier à environ mi-hauteur du récipient de fusion, de l'air est insufflé pour la combustion totale des gaz rejetés.
